# EUROPEAN PATENT APPLICATION

(11) **EP 4 775 303 A1**
(43) Date of publication of application: **15.07.2026**
(21) Application number: 24862462.9
(22) Date of filing: 29.07.2024
(51) Int. Cl.: B01J 20/22, B01J 20/30, C07F 7/18

(54) **MOF MATERIAL FOR SHAPING, SHAPED BODY, GAS ADSORBENT, GAS ADSORPTION DEVICE, AND METHOD FOR PRODUCING MOF MATERIAL FOR SHAPING**

(30) Priority: 06.09.2023 JP 2023144561
(71) Applicant: Niterra Co., Ltd., Nagoya-shi, Aichi 461-0005 (JP)
(72) Inventor: MORIKAWA, Ryoko, Nagoya-shi, Aichi 461-0005 (JP); YAMAGIWA, Katsuya, Nagoya-shi, Aichi 461-0005 (JP)
(74) Representative: Grünecker Patent- und Rechtsanwälte PartG mbB
(86) International application number: PCT/JP2024/026947
(87) International publication number: WO 2025/052806

(57) **Abstract**

This MOF material for shaping composed of a metal-organic framework (MOF) is localized on the surfaces of crystal particles forming the MOF and contains silicon (Si).

## Description

### TECHNICAL FIELD

The present disclosure relates to a MOF material which is to be shaped (hereinafter may also be referred to as a "to-be-shaped MOF material"), to a shaped body, to a gas adsorbent, to a gas adsorption apparatus, and to a method for producing a to-be-shaped MOF material.

### BACKGROUND ART

A MOF (metal organic framework) is a complex crystal formed of a metal ion and an organic ligand bound to the ion via a coordination bond. The MOF has a porous coordination network structure which is formed of a metal ion and an organic ligand and which has high regularity. The network structure is provided with innumerable nano spaces. Through employment of such nano spaces, a MOF can be used as a material for occluding or isolating a variety of substances such as a gas, and as a catalyst material. Since a MOF is generally synthesized as a powder, the powder-form MOF must be molded (shaped) when the MOF is employed as the aforementioned material for occluding or isolating a variety of substances such as a gas and catalyst material. A conventional method of shaping a powder-form MOF uses a binding agent such as a binder or a polymer (see, for example, Patent Literatures 1 and 2).

### CITATION LIST

### PATENT LITERATURE

Patent Literature 1: JP4980918B
Patent Literature 2: JP6272696B

### SUMMARY OF INVENTION

### TECHNICAL PROBLEM

However, as mentioned above, when the MOF is shaped by binding particles of the MOF by use of a binder or the like, micropores of the MOF (i.e., a porous body) are clogged, whereby the specific surface area of the MOF decreases. As a result, the function of, for example, occluding and separating gas by means of nano spaces may be deactivated. Even when the function of the MOF is not degraded, the adsorption capacity per unit mass problematically decreases due to addition of a binder. Thus, there is demand for a technique of shaping a MOF which technique employs no binding agent such as a binder or employs a reduced amount thereof, while suppressing a drop in performance of the MOF.

### SOLUTION TO PROBLEM

The present disclosure may be carried out as the following aspects.
(1) According to one aspect of the present disclosure, there is provided a to-be-shaped MOF material, which is formed of a metal organic framework (MOF). In the to-be-shaped MOF material, silicon (Si) is localized on surfaces of crystal particles forming the MOF.
   According to the to-be-shaped MOF material of the aspect, bonding of the surface of the MOF is provided by the mediation of silicon. Thus, no binding agent such as a binder is required for shaping the MOF, or the amount of the binding agent such as a binder can be reduced.
(2) In the to-be-shaped MOF material of the above aspect, a ratio of an atomic fraction of a complex metal contained in the MOF to silicon (Si) (complex metal contained in the MOF: Si) may be 0.98:0.02 to 0.9:0.10. By virtue of the technical means, a drop in performance of the MOF such as gas adsorption amount, which would otherwise be caused by an excessive amount of Si, can be suppressed, and the effect of facilitating shaping of the MOF can be achieved.
(3) According to another aspect of the present disclosure, there is provided a shaped body formed of the to-be-shaped MOF material as recited in (1) above.
   According to the shaped body of the above aspect, bonding of the surface of the MOF is provided by the mediation of silicon. Thus, no binding agent such as a binder is required for shaping the MOF, or the amount of the binding agent such as a binder can be reduced.
(4) In the shaped body of the above aspect, a mean particle size may be adjusted to 1 mm or greater. According to this technical means, the effects attributed to molding MOF can be enhanced, the effects including, for example, facilitating handling of MOF material, suppressing pressure loss in an apparatus employing MOF material, and suppressing a malfunction evoked by vacuuming for gas separation when the MOF material is applied to a gas adsorption apparatus.
(5) In the to-be-shaped MOF material of the above aspect, when a carbon dioxide adsorption/desorption isotherm is drawn at a measurement temperature of 0°C, and a carbon dioxide adsorption amount at an absolute pressure of 0.4 or higher is determined in a comparative manner, the carbon dioxide adsorption amount may be 1.5 times or greater the carbon dioxide adsorption amount of a MOF having the same composition as that of the to-be-shaped MOF material, except that no silicon is contained. According to this technical means, carbon dioxide adsorption performance of the to-be-shaped MOF material can be secured.
(6) In the to-be-shaped MOF material of the above aspect, when a carbon dioxide adsorption/desorption isotherm is drawn at a measurement temperature of 25°C, and a carbon dioxide adsorption amount at an absolute pressure of 0.4 or higher is determined in a comparative manner, the carbon dioxide adsorption amount may be 1.5 times or greater the carbon dioxide adsorption amount of a MOF having the same composition as that of the to-be-shaped MOF material, except that no silicon is contained. According to this technical means, carbon dioxide adsorption performance of the to-be-shaped MOF material can be secured.
(7) In the shaped body of the above aspect, when a carbon dioxide adsorption/desorption isotherm is drawn at a measurement temperature of 0°C, and a carbon dioxide adsorption amount at an absolute pressure of 0.4 or higher is determined in a comparative manner, the carbon dioxide adsorption amount may be 1.5 times or greater the carbon dioxide adsorption amount of a MOF having the same composition as that of the to-be-shaped MOF material, except that no silicon is contained. According to this technical means, carbon dioxide adsorption performance of the shaped body can be secured.
(8) In the shaped body of the above aspect, when a carbon dioxide adsorption/desorption isotherm is drawn at a measurement temperature of 25°C, and a carbon dioxide adsorption amount at an absolute pressure of 0.4 or higher is determined in a comparative manner, the carbon dioxide adsorption amount may be 1.5 times or greater the carbon dioxide adsorption amount of a MOF having the same composition as that of the to-be-shaped MOF material, except that no silicon is contained. According to this technical means, carbon dioxide adsorption performance of the shaped body can be secured.
(9) In the to-be-shaped MOF material of the above aspect, when a carbon dioxide adsorption/desorption isotherm is drawn at a measurement temperature of 0°C, a carbon dioxide adsorption amount at an absolute pressure of 0.4 may be 45 cm³ (STP)/g or more. According to this technical means, carbon dioxide adsorption performance of the to-be-shaped MOF material can be secured.
(10) In the to-be-shaped MOF material of the above aspect, when a carbon dioxide adsorption/desorption isotherm is drawn at a measurement temperature of 25°C, a carbon dioxide adsorption amount at an absolute pressure of 0.4 may be 25 cm³ (STP)/g or more. According to this technical means, carbon dioxide adsorption performance of the to-be-shaped MOF material can be secured.
(11) In the shaped body of the above aspect, when a carbon dioxide adsorption/desorption isotherm is drawn at a measurement temperature of 0°C, a carbon dioxide adsorption amount at an absolute pressure of 0.4 may be 40 cm³ (STP)/g or more. According to this technical means, carbon dioxide adsorption performance of the shaped body can be secured.
(12) In the shaped body of the above aspect, when a carbon dioxide adsorption/desorption isotherm is drawn at a measurement temperature of 25°C, a carbon dioxide adsorption amount at an absolute pressure of 0.4 may be 20 cm³ (STP)/g or more. According to this technical means, carbon dioxide adsorption performance of the shaped body can be secured.
(13) According to still another aspect of the present disclosure, there is provided a gas adsorbent for adsorbing and releasing gas. The gas adsorbent is formed of a shaped body as recited in any one of (3), (4), (7), (8), (11), and (12).
   According to the gas adsorbent of the above aspect, bonding of the surface of the MOF is provided by the mediation of silicon. Thus, no binding agent such as a binder is required for shaping the MOF to fabricate the gas adsorbent, or the amount of the binding agent such as a binder can be reduced.
(14) According to yet another aspect of the present disclosure, there is provided a gas adsorption apparatus including a gas adsorbent as recited in (13) above.
   According to the gas adsorption apparatus of the above aspect, a malfunction evoked by vacuuming for gas separation can be suppressed.
(15) According to yet another aspect of the present disclosure, there is provided a method for producing a to-be-shaped MOF material. In the method for producing a to-be-shaped MOF material, a silane derivative having a functional group that can form a chemical bond with a functional group present on a surface the MOF is added to a metal organic framework (MOF).

According to the above to-be-shaped MOF material production method, the silane derivative forms a chemical bond with a functional group present on the surface of the MOF, to thereby binding the MOF with the silane derivative. Thus, shaping of the MOF can be facilitated. As a result, no binding agent such as a binder is required for shaping the MOF, or the amount of the binding agent such as a binder can be reduced.

The present disclosure can also be carried out in various aspects other than those described above. For example, the present disclosure can be realized, for example, as the aspects of a gas adsorbent formed of the shaped body, a gas adsorption apparatus including the gas adsorbent, and a method for producing the shaped body.

### BRIEF DESCRIPTION OF DRAWINGS

[FIG. 1] Explanatory drawing of the structure of UiO-66-COOH into which carboxy groups have been incorporated.
[FIG. 2] Explanatory table showing examples of a silane derivative.
[FIG. 3] Explanatory view schematically showing the composition of the to-be-shaped MOF material of the present embodiment.
[FIG. 4] Explanatory table showing prepared MOF materials to be shaped and shaped bodies.
[A of FIG. 5] TEM image obtained through Zr elemental mapping of sample S2.
[B of FIG. 5] TEM image obtained through Si elemental mapping of sample S2.
[A of FIG. 6] TEM image obtained through Zr elemental mapping of sample S11.
[B of FIG. 6] TEM image obtained through Si elemental mapping of sample S11.

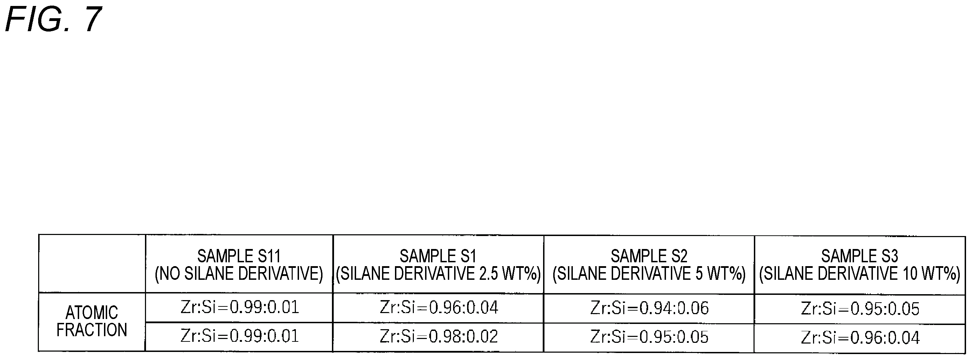

[FIG. 7] Explanatory table showing atomic fractions of samples S1 to S3, and S11.

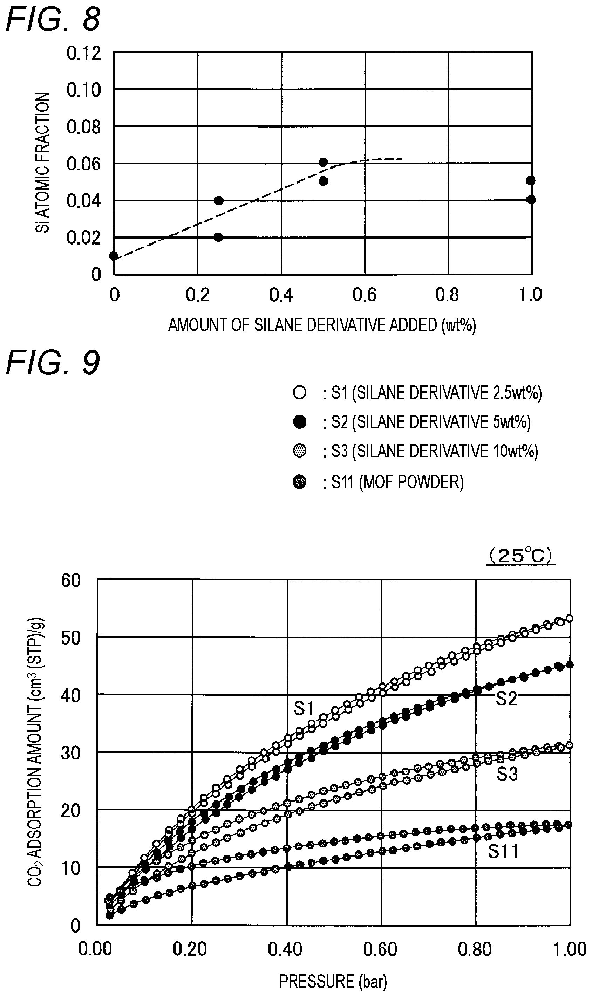

[FIG. 8] Explanatory graph with plotting of atomic fractions.
[FIG. 9] Explanatory graph showing a carbon dioxide adsorption/desorption isotherm measured at 25°C.

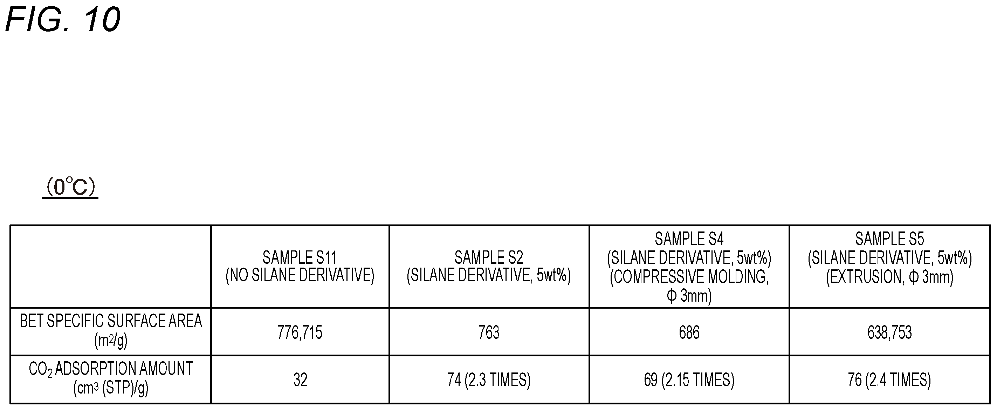

[FIG. 10] Explanatory table showing BET specific surface areas and carbon dioxide adsorption amounts at 0°C.

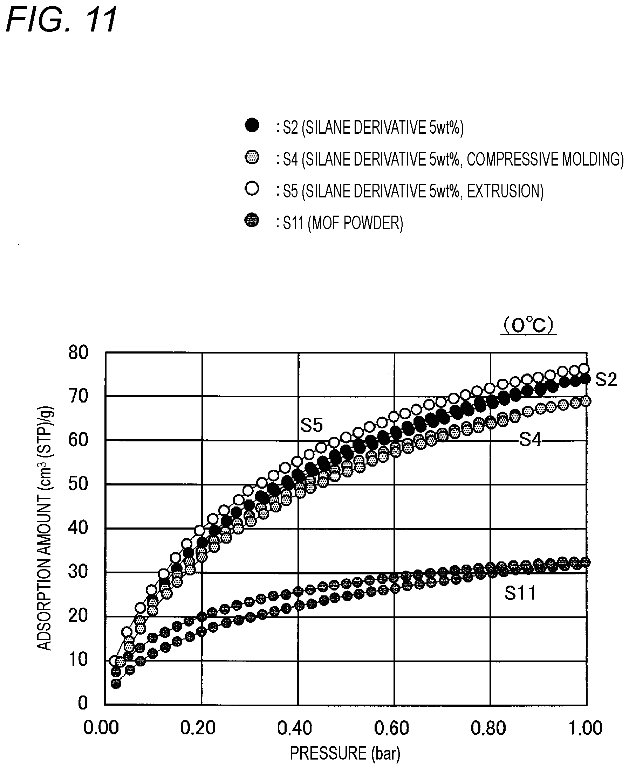

[FIG. 11] Explanatory graph showing a carbon dioxide adsorption/desorption isotherm measured at 0°C.

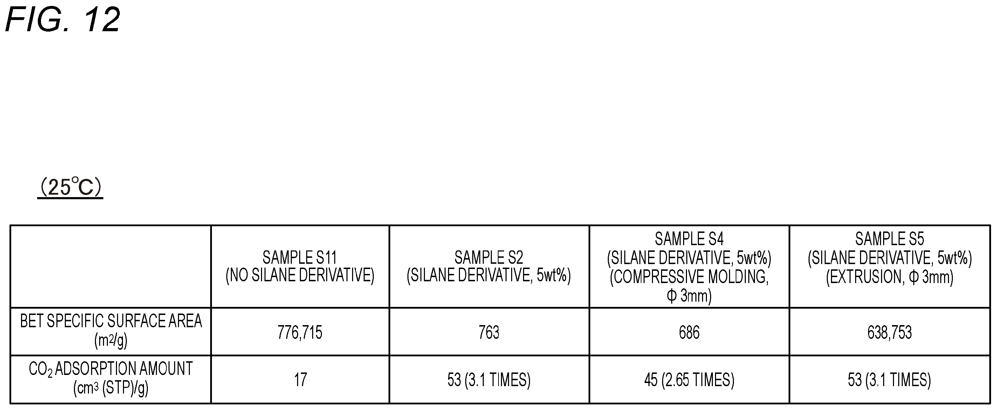

[FIG. 12] Explanatory table showing BET specific surface areas and carbon dioxide adsorption amounts at 25°C.

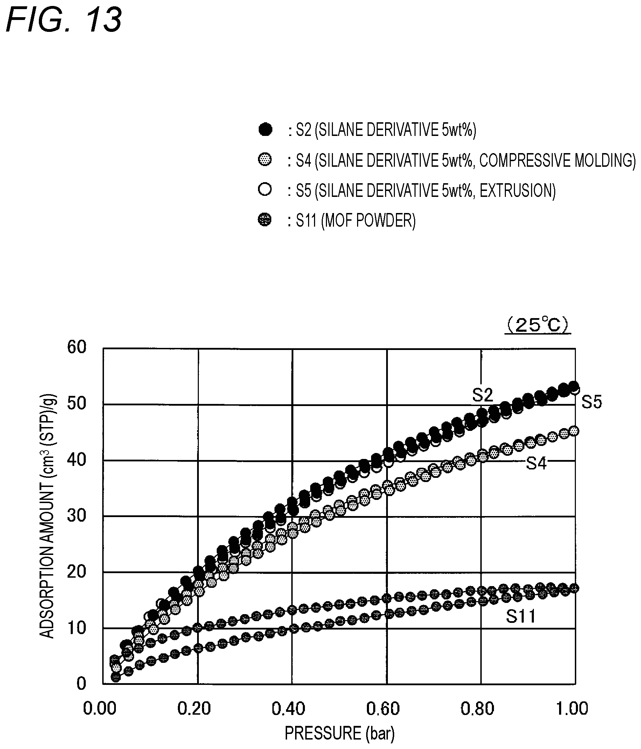

[FIG. 13] Explanatory graph showing a carbon dioxide adsorption/desorption isotherm measured at 25°C.

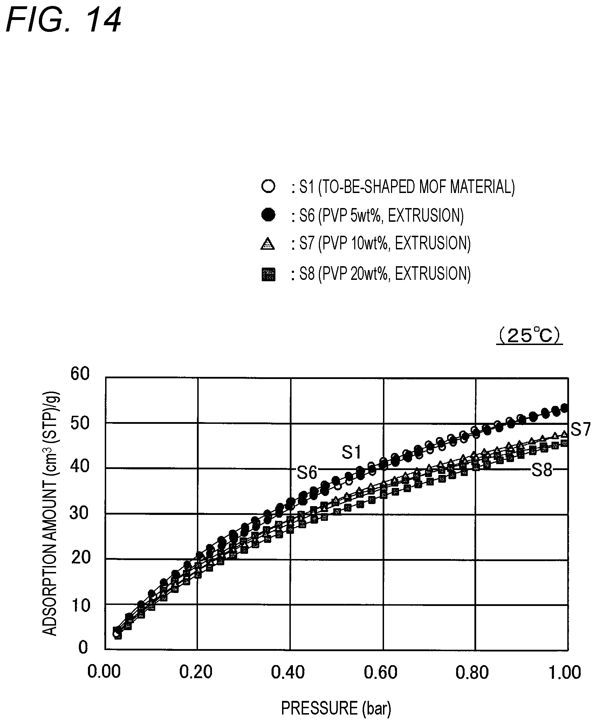

[FIG. 14] Explanatory graph showing a carbon dioxide adsorption/desorption isotherm measured at 25°C.

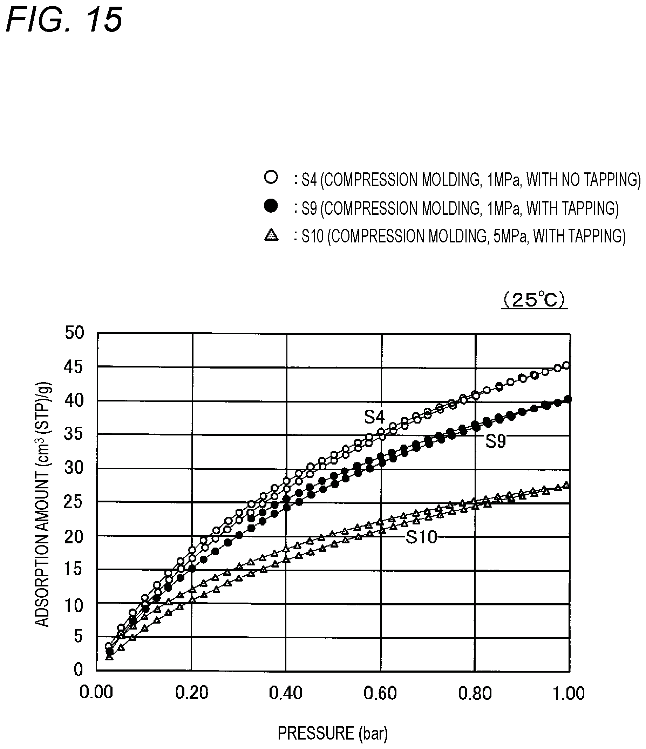

[FIG. 15] Explanatory graph showing a carbon dioxide adsorption/desorption isotherm measured at 25°C.

### DESCRIPTION OF EMBODIMENTS

### A. Composition of to-be-shaped MOF material:

The to-be-shaped MOF material of the present embodiment is formed of a metal organic framework (MOF), and silicon (Si) is localized on the surfaces of crystal particles forming the aforementioned MOF. A MOF is a porous metal complex which is yielded through self-assembly of a metal ion and an organic ligand and is a crystalline material having an arrangement with high regularity. Since the aforementioned arrangement is provided with innumerable nano spaces, a wide surface area is achieved. The to-be-shaped MOF material of the present embodiment "contains silicon (Si) which is localized on the surfaces of crystal particles forming the MOF," but the metal ions and organic ligands forming the MOF contain substantially no silicon (Si). Since the to-be-shaped MOF material of the present embodiment contains silicon (Si) which is localized on the surfaces of crystal particles forming the MOF, no binding agent such as a binder is used, or the amount of the binding agent such as a binder is reduced, whereby shaping of the MOF can be facilitated, while a drop in performance of the MOF, which would otherwise be caused by use of a binder or the like, can be suppressed. As mentioned below, the to-be-shaped MOF material of the present embodiment having the characteristics may be produced by providing a MOF molded by use of a material substantially containing no silicon (Si), and adding a silane derivative (i.e., a compound containing silicon (Si) to the MOF.

No particular limitation is imposed on the MOF forming the to-be-shaped MOF material of the present embodiment, and the MOF may be appropriately chosen in accordance with use and the like of the shaped body formed of the to-be-shaped MOF material (e.g., occlusion and separation of gas, catalyst, and type of target gas). The metal ion serving as the complex metal component of the MOF may be at least one species selected from zirconium ion (Zr⁴⁺), zinc ion (Zn²⁺), copper ion (Cu²⁺), aluminum ion (Al³⁺), iron ion (Fe³⁺), cobalt ion (Co³⁺), nickel ion (Ni²⁺), magnesium ion (Mg²⁺), chromium ion (Cr³⁺), and manganese ion (Mn²⁺). The organic ligand forming the MOF may be at least one species selected from carboxylic acids such as a dicarboxylic acid including an aromatic dicarboxylic acid (e.g., terephthalic acid); amines; imidazoles; and derivatives thereof. Through combination of the complex metal and the organic ligand and the like, the chemical stability, properties of pores (pore size and pore surfaces), resulting type and amount of adsorbed gas, and various performances such as catalytic activity, magnetic property, and polarity of the obtained MOF can be tuned. For example, when the to-be-shaped MOF material is used on the basis of a property of adsorbing gases such as carbon dioxide, the MOF material preferably has such a property that adsorption of other gases such as nitrogen and steam is suppressed. Also, the MOF forming the to-be-shaped MOF material of the present embodiment may be a MOF having a relatively rigid framework structure and an intrinsic pore size, or a so-called soft MOF having a relatively soft framework structure which allows expansion and contract of the framework to occur concomitantly with adsorption and desorption of gas.

The to-be-shaped MOF material of the present embodiment may be produced by adding a silane derivative to a MOF. The silane derivative added to the MOF is a silane derivative having a functional group that can form a chemical bond (hereinafter may also be referred to as a "silane derivative side functional group") with a functional group present on the surface of the MOF (hereinafter may also be referred to as a "MOF side functional group"). Notably, the "chemical bond" formed from the silane derivative and the MOF side functional group may include both a chemical bond formed between the silane derivative and the MOF side functional group and a chemical bond between the silane derivative molecules. Also, the "chemical bond" may be a chemical bond including a bond represented by a siloxane bond (-Si-O-Si-) or (-O-Si-). Examples of the "MOF side functional group" involved in such a chemical bond include a carboxy group (-COOH) and a hydroxy group (-OH). When the organic ligand of the MOF intrinsically has the aforementioned "MOF side functional group," such a functional group can form a chemical bond with the silane derivative. However, a MOF in which a "MOF side functional group" is further incorporated into the organic ligand is preferably employed. In one possible procedure of producing the to-be-shaped MOF material, a MOF, a silane derivative, and an organic solvent (e.g., ethanol) are mixed under stirring and appropriate conditions (e.g., ambient temperature), and the solvent is removed through filtration under reduced pressure, followed by drying in vacuum. After completion of the above drying step, a to-be-shaped MOF material which can easily be pulverized is yielded.

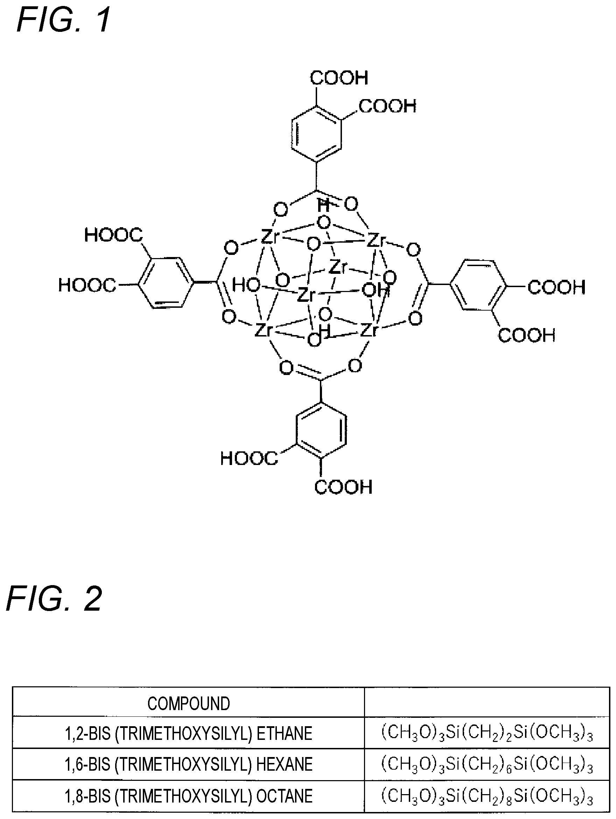

FIG. 1 is an explanatory view showing the structure of UiO-66-COOH, which is an example of a MOF in which a "MOF side functional group" has been incorporated into an organic ligand, specifically, a structure in which a carboxy group (-COOH) has been incorporated into a Zr-type MOF; i.e., UiO-66 (Zr₆O₄(OH)₄(BDC)₆ (wherein BDC is 1,4-benzenedicarboxylic acid). Through intentionally incorporating a "MOF side functional group" into MOF, there can be enhanced the efficiency of forming a chemical bond from a "silane derivative side functional group" of a silane derivative added to MOF and the MOF side functional group.

As mentioned above, the silane derivative added to MOF for producing the to-be-shaped MOF material of the present embodiment essentially has a "silane derivative side functional group" that can form a chemical bond with the "MOF side functional group." For example, there may be used a silane coupling agent having a hydrolyzable functional group such as an alkoxy group (typically, a methoxy group (-OCH₃) or an ethoxy group (-OC₂H₅)) as the silane derivative side functional group." Also, the silane derivative may be a compound other than a silane coupling agent and essentially has a "silane derivative side functional group" that can form a chemical bond with the "MOF side functional group." Examples of the silane derivative which can be suitably employed include a methoxy-type alkylsilane.

The silane derivative may have two or more "silane derivative side functional groups." In such a case, one silane derivative molecule can bound to a plurality of "MOF side functional groups." In the case where the silane derivative has two silane derivative side functional groups, and the silane derivative has, for example, a linear chain structure formed of an alkyl group or the like, the linear chain structure preferably has a silane derivative side functional group at each end thereof. Examples of such a silane derivative include a both-end bistrimethoxy-type silane derivative. The number of carbon atoms of an alkyl moiety (i.e., the number of methylene groups) of the silane derivative may be adjusted to, for example, 2 to 10.

FIG. 2 is an explanatory table showing an example of the aforementioned silane derivatives. FIG. 2 shows examples of the silane derivative having various linear chain alkyl groups: 1,2-bis(trimethoxysilyl)ethane (two methylene groups; e.g., KBM-3026, product of Shin-Etsu Chemical Co., Ltd.), 1,6-bis(trimethoxysilyl)hexane (six methylene groups; e.g., KBM-3066, product of Shin-Etsu Chemical Co., Ltd.), and 1,8-bis(trimethoxysilyl)octane (eight methylene groups; e.g., KBM-3086, product of Shin-Etsu Chemical Co., Ltd.). In production of the to-be-shaped MOF material of the present embodiment, a single species of the silane derivative, or a plurality of silane derivatives in combination at any proportions may be used.

In production of the to-be-shaped MOF material of the present embodiment, the amount of the silane derivative added to MOF is preferably smaller, so long as the effect exerted by the presence of silicon (Si) localized on the surfaces of the crystal particles forming the MOF. For example, the amount is preferably adjusted to 2.5wt% or less with respect to the total amount of the MOF and the silane derivative, and may be adjusted to about 1.0 wt%. Thus, by suppressing the amount of the silane derivative added, there can be suppressed clogging of micropores of the MOF with the silane derivative, resulting in a drop in performance of MOF (e.g., gas adsorption performance).

In the to-be-shaped MOF material of the present embodiment, the ratio of an atomic fraction of a complex metal contained in the MOF forming the to-be-shaped MOF material to silicon (Si) (i.e., complex metal contained in MOF : Si) may be adjusted to 0.98:0.02 to 0.9:0.10. The atomic fraction may be determined by means of a transmission electron microscope with EDS (TEM-EDS) or a scanning transmission electron microscope with EDS (STEM-EDS). Through combining such an electron microscope with EDS, elemental mapping can be performed, and the atomic fraction can be determined through quantitative mapping (wt%). Assuming that the total amount of the complex metal and silicon (Si) is 1, when the measurement of the Si ratio (Si atomic fraction) is 0.02 or greater, Si has been proven to be present in a sufficiently detectable amount with respect to the background in the to-be-shaped MOF material. In this case, the effect of the present invention; i.e., the effect of facilitating shaping of the MOF material by the presence of Si localized on the surfaces of the crystal particles forming the MOF, can be satisfactorily achieved. Also, when the measurement of the Si atomic fraction is 0.10 or less, a drop in performance of the MOF such as gas adsorption amount by clogging of micropores of MOF, which would otherwise be caused by an excessive amount of Si, can be suppressed. From the viewpoint of avoiding the excess amount of Si added, the Si atomic fraction is preferably 0.09 or less, more preferably 0.08 or less.

### B. Shaped body

The to-be-shaped MOF material produced through the aforementioned production method as, for example, a powder-form material, may be used as a shaped body obtained through molding (shaping). A variety of methods of molding the to-be-shaped MOF material may be employed, and examples include injection, extrusion, blow molding, compression molding, powder molding, calendaring, and hot molding. The shape employed for the shaped body may be any of various shapes such as spherical, columnar, rectangular, etc. The shaped body obtained by shaping the to-be-shaped MOF material of the present embodiment may be employed as, for example, a gas adsorbent included in a gas adsorption apparatus. By providing a shaped body formed by molding the MOF material in the above manner, handling of the MOF material can be facilitated. In addition, by forming the MOF material into a shaped body, pressure loss of an apparatus employing the MOF material can be suppressed. Further, by forming the gas adsorbent into a shaped body, there can be suppressed a malfunction evoked by vacuuming for gas separation in, for example, a gas adsorption apparatus (gas separation apparatus) on the basis of a pressure swing adsorption (PSA) technique. When the gas adsorbent is a powder, there may occur problems such as loss of a gas adsorbent in vacuuming (dissipation via gas flow) and a malfunction of a vacuum pump by taking the powder therein.

The shaped body essentially has a mean particle size of, for example, 1 mm or greater. Under the condition, the aforementioned effect exerted by shaping the MOF material to form a shaped body can be enhanced. From the viewpoint of achieving the above effect exerted by shaping, the mean particle size of shaped body is preferably adjusted to 2 mm or greater, more preferably 3 mm or greater. Also, from the viewpoint of securing gas diffusion performance in an apparatus including the shaped body, the mean particle size of shaped body is preferably adjusted to, for example, 10 mm or less, more preferably 8 mm or less, still more preferably 6 mm or less. The mean particle size of the shaped body may be determined through any of a variety of methods, so long as it achieves a measurement with a sufficient precision. For example, the measurement may be conducted through a caliper, a digital microscope, an image dimension meter, etc.

When the to-be-shaped MOF material of the present embodiment is molded to form a shaped body, a binder or no binder may be added during molding. Addition of the binder or the amount of the binder to be added may be appropriately determined in accordance with the molding method for shaping, performance to be required for the produced shaped body, and other factors. For example, when the shape body is formed through compression molding, relatively high compressive force is applied during molding. Thus, the effect of reducing the amount of binder can be easily attained, thereby facilitating binder-less molding. When the shape body is formed through extrusion, relatively weak compressive force is applied during molding. Thus, addition of a binder is preferred. When a powder-form MOF is shaped on the basis of binding force of a binder, a more than 10 wt% of binder is generally needed. In the case where the to-be-shaped MOF material of the present embodiment is molded, even when a binder is added, the amount of the binder can be adjusted to 10 wt% or less. Thus, satisfactory shaping can be achieved through addition of a binder in a less amount. The amount of the binder added to the to-be-shaped MOF material of the present embodiment may be adjusted to, for example, 2 to 5 wt%.

When a binder is used during molding the to-be-shaped MOF material of the present embodiment, various binders known as a binder for molding a powder material may be employed. From the viewpoint of securing heat resistance, an inorganic binder such as polyvinylpyrrolidone (PVP), poly(vinyl alcohol) (PVA), or polyethylene oxide (PEO) is preferably used. Among the resins usable as a binder, PVP is more preferred, since PVP has higher heat resistance and easily secures stability under relatively high temperature conditions, for example, activation treatment of MOF. In addition, among the resins usable as a binder, PVP can reduce the effect of water on MOF by virtue of its higher hygroscopicity. Also, since PVP exhibits relatively favorable adhesiveness and dispersibility, bonding between MOF and the silane derivative can be more easily enhanced.

The shaped body obtained by molding the to-be-shaped MOF material of the present embodiment may be applied to various apparatuses through properties of MOF in relation to adsorption and separation of gas and catalytic activity. For example, there can be provided a gas adsorption apparatus employing a gas adsorbent formed of the shaped body of the present embodiment. Examples of the gas adsorption apparatus include an apparatus based on pressure swing adsorption (PSA), in which gas separation is achieved through the difference between a gas adsorption amount at high pressure (at gas adsorption) and that at low pressure (at gas desorption) which difference is provided by varying the pressure of gas in an adsorption tower employing a gas adsorbent between a preliminary set high pressure state and a preliminary set low pressure state. Alternatively, there may be provided an apparatus based on thermal swing adsorption (TSA), in which gas separation is achieved through the difference between a gas adsorption amount at low temperature (at gas adsorption) and that at high temperature (at gas desorption) which difference is provided by varying the temperature of the adsorption tower between a preliminary set high temperature state and a preliminary set low temperature state. Yet alternatively, there may be provided an apparatus based on pressure and thermal swing adsorption (PTSA), which is realized through combination of the aforementioned variations in pressure and temperature. From the viewpoint of mutually switching the adsorption step and the desorption step within a short period of time, PSA is preferred.

The thus-formed to-be-shaped MOF material of the present embodiment is produced by adding, to MOF, a silane derivative having a silane derivative side functional group that can form a chemical bond with a MOF side functional group and contains silicon (Si) localized on the surfaces of crystal particles forming the MOF. Thus, no binding agent such as a binder is required for shaping MOF, or the amount of binding agent such as a binder can be reduced.

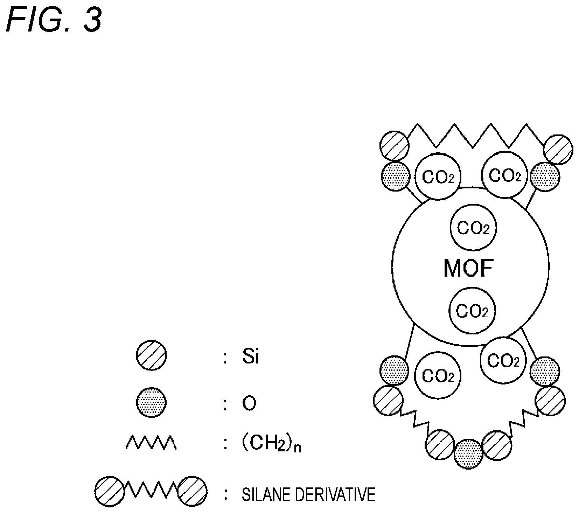

FIG. 3 is an explanatory view schematically showing the composition of the to-be-shaped MOF material of the present embodiment, produced by adding the silane derivative to MOF. Specifically, the feature of forming the to-be-shaped MOF material through bonding of a silane derivative to the MOF. In production of the to-be-shaped MOF material by adding a silane derivative to MOF, a hydrolyzable functional group of the silane derivative (e.g., a methoxy group (-OCH₃)) is hydrolyzed to form a silaonol (Si-OH) and an alcohol. Then, condensation reaction between the silanol formed via hydrolyzation and MOF side functional groups proceeds to form a chemical bond, whereby the MOF is bound to the silane derivative. In a part of the silane derivative, condensation of silanol groups of the silane derivative proceeds, to thereby achieve bonding of silane derivative molecules. Thus, a to-be-shaped MOF material as shown in FIG. 3 is conceivably yielded. Further conceivably, a part of crystal particles of the MOF are bound together by the mediation of the silane derivative.

As described above, conceivably, the shape of MOF is solidified through bonding of MOF side functional groups present on the surface of the MOF by the mediation of the silane derivative, whereby shaping of the MOF serving as the to-be-shaped MOF material, is facilitated. Also, as is the case of a long-chain silane derivative having a methylene group bound thereto shown in FIG. 2, difficulty is generally encountered in incorporation of a relatively large molecules of the silane derivative into pores of the MOF. The bonding of the MOF side functional group and the silane derivative side functional group substantially proceeds on the surface of the MOF. Among the silane derivative molecules added to MOF during production of the to-be-shaped MOF material, an excessive part thereof which has not been involved in bonding to the surface of the MOF is conceivably removed with a solvent which is removed from the MOF in a to-be-shaped MOF material production step. As a result, a silane derivative (and silicon derived from the silane derivative) is localized on the surface of the MOF. Thus, clogging of the micropores in the MOF with the silane derivative can be suppressed, and a drop in performance of the MOF, which would otherwise be caused by clogging of micropores of the MOF, is suppressed. Particularly in the case of the to-be-shaped MOF material of the present embodiment, the amount of the silane derivative can be minimized as compared with that of a conventional binder. As a result, the effect of suppressing clogging of the micropores possibly evoked by addition of the silane derivative can be enhanced.

According to the to-be-shaped MOF material of the present embodiment and the shaped body formed of such a to-be-shaped MOF material, an enhanced gas adsorption performance can be achieved, as compared with a conventional MOF forming the to-be-shaped MOF material. The enhancement is conceivably attributed to a new gas adsorption mechanism. Specifically, bonding of a silane derivative to a MOF on the surface of the MOF newly provides gas-adsorbable sites between the surface of the MOF and the silane derivative as shown in FIG. 3 (gas: carbon dioxide in FIG. 3).

Also according to the to-be-shaped MOF material of the present embodiment and the shaped body formed of such a to-be-shaped MOF material, a silane derivative forms a chemical bond with a MOF side functional group. A type of such chemical bond is a siloxane bond (-Si-O-Si-) having a considerably high bond energy, which bond enhances chemical stability of the to-be-shaped MOF material. As a result, heat resistance and weather resistance of the to-be-shaped MOF material can be enhanced. Thus, even when a relatively high-temperature treatment such as an activation treatment of MOF, for example, in vacuum at a temperature higher than 100°C is conducted, or the MOF is used under relatively high temperature conditions, stability of the MOF material can be easily secured.

As described above, the to-be-shaped MOF material of the present embodiment and the shaped body achieve an increase in gas adsorption amount, as compared with a conventional MOF forming the to-be-shaped MOF material. In the case of such a to-be-shaped MOF material of the present embodiment, when a carbon dioxide adsorption/desorption isotherm is drawn at a measurement temperature of 0°C, and the carbon dioxide adsorption amount at an absolute pressure of 0.4 or higher is determined in a comparative manner, the carbon dioxide adsorption amount is preferably 1.5 times or greater the carbon dioxide adsorption amount of a MOF having the same composition as that of the to-be-shaped MOF material of the present embodiment, except that no silicon is contained. Also, in the case of such a to-be-shaped MOF material of the present embodiment, when a carbon dioxide adsorption/desorption isotherm is drawn at a measurement temperature of 25°C, and the carbon dioxide adsorption amount at an absolute pressure of 0.4 or higher is determined in a comparative manner, the carbon dioxide adsorption amount is preferably 1.5 times or greater the carbon dioxide adsorption amount of a MOF having the same composition as that of the to-be-shaped MOF material of the present embodiment, except that no silicon is contained.

In the case of the shaped body formed of the to-be-shaped MOF material of the present embodiment, when a carbon dioxide adsorption/desorption isotherm is drawn at a measurement temperature of 0°C, and the carbon dioxide adsorption amount at an absolute pressure of 0.4 or higher is determined in a comparative manner, the carbon dioxide adsorption amount is preferably 1.5 times or greater the carbon dioxide adsorption amount of a MOF having the same composition as that of the to-be-shaped MOF material of the present embodiment, except that no silicon is contained. Also, in the case of the shaped body formed of the to-be-shaped MOF material of the present embodiment, when a carbon dioxide adsorption/desorption isotherm is drawn at a measurement temperature of 25°C, and the carbon dioxide adsorption amount at an absolute pressure of 0.4 or higher is determined in a comparative manner, the carbon dioxide adsorption amount is preferably 1.5 times or greater the carbon dioxide adsorption amount of a MOF having the same composition as that of the to-be-shaped MOF material of the present embodiment, except that no silicon is contained.

In the aforementioned to-be-shaped MOF material of the present embodiment or shaped body, the "MOF having the same composition as that of the to-be-shaped MOF material of the present embodiment, except that no silicon is contained" may be a MOF to which a silane derivative is to be added in production of the to-be-shaped MOF material. In a specific to-be-shaped MOF material or shaped body, a MOF corresponding to the "MOF having the same composition as that of the to-be-shaped MOF material of the present embodiment, except that no silicon is contained" may be identified through the X-ray diffraction (XRD) method. In a specific procedure, the crystal structure of the MOF forming the target to-be-shaped MOF material or shaped body is analyzed, and the results are compared with known information in relation to crystal structure, such as Cambridge Structural Database (CSD) provided by Cambridge Crystallographic Data Centre (CCDC). Notably, hereinafter, the "MOF having the same composition as that of the to-be-shaped MOF material of the present embodiment, except that no silicon is contained" may also be referred to as a "raw material MOF." In the case in which a MOF side functional group has been incorporated into a raw material MOF, the raw material MOF can be identified through, in addition to the aforementioned XRD analysis, an additional technique of quantitative analysis such as nuclear magnetic resonance (NMR) analysis or infrared (IR) spectrometry. In order to identify the raw material MOF including the state of incorporation of a MOF side functional group, changes in properties of MOF evoked by incorporation of the MOF side functional group may be employed. The changes include a change in BET specific surface area (for example, while the BET specific surface area of the aforementioned UiO-66 is 1,500 m²/g, the BET specific surface area of carboxy group-incorporated UiO-66-COOH in FIG. 1 is about 700 m²/g), the value of the peak attributed to OH vibration in IR analysis, and the difference in amount of thermal decomposition and oxidative decomposition temperature in thermogravimetric and differential thermal (TG-DTA) analysis.

Meanwhile, in the to-be-shaped MOF material of the present embodiment, when a carbon dioxide adsorption/desorption isotherm is drawn at a measurement temperature of 0°C, a carbon dioxide adsorption amount at an absolute pressure of 0.4 is preferably 45 cm³ (STP)/g or more. In the to-be-shaped MOF material of the present embodiment, when a carbon dioxide adsorption/desorption isotherm is drawn at a measurement temperature of 25°C, a carbon dioxide adsorption amount at an absolute pressure of 0.4 is preferably 25 cm³ (STP)/g or more.

Also, in the shaped body formed of the to-be-shaped MOF material of the present embodiment, when a carbon dioxide adsorption/desorption isotherm is drawn at a measurement temperature of 0°C, a carbon dioxide adsorption amount at an absolute pressure of 0.4 is preferably 40 cm³ (STP)/g or more. In the shaped body formed of the to-be-shaped MOF material of the present embodiment, when a carbon dioxide adsorption/desorption isotherm is drawn at a measurement temperature of 25°C, a carbon dioxide adsorption amount at an absolute pressure of 0.4 is preferably 20 cm³ (STP)/g or more. Notably, the carbon dioxide adsorption amount at an absolute pressure of 0.4, when the carbon dioxide adsorption/desorption isotherm of the aforementioned to-be-shaped MOF material or shaped body is drawn, corresponds to the carbon dioxide adsorption amount represented by the lower adsorption curve in the carbon dioxide adsorption/desorption isotherm.

In the aforementioned to-be-shaped MOF material or shaped body, a property in relation to carbon dioxide adsorption amount may be appropriately modified through, for example, the combination of a complex metal and an organic ligand forming the MOF, and the species of the silane derivative added to the MOF. For example, when UiO-66-COOH, yielded by incorporating a carboxy group (-COOH) serving as a MOF side functional group into UiO-66, which is a Zr-type MOF, is used as a MOF, and 1,6-bis(trimethoxysilyl)hexane (six methylene groups; e.g., KBM-3066, product of Shin-Etsu Chemical Co., Ltd.) is used as a silane derivative, the aforementioned values in relation to carbon dioxide adsorption amount can be easily achieved.

### EXAMPLES

### <Production of to-be-shaped MOF material and shaped body>

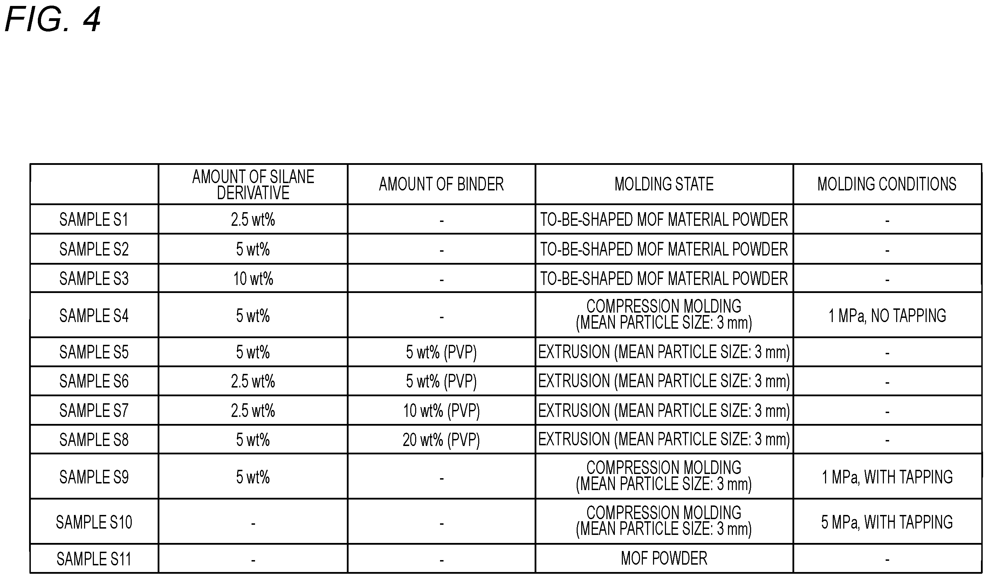

FIG. 4 is an explanatory table showing the to-be-shaped MOF materials and shaped bodies produced for performance assessment. Samples S1 to S3 are powder-form to-be-shaped MOF materials, and samples S4 to S 10 are shaped bodies formed by molding the corresponding to-be-shaped MOF materials. Sample S11 is a MOF serving as a material for preparing samples S1 to S10 (i.e., raw material MOF). In production of samples S1 to S10, a silane derivative having a functional group that can form a chemical bond with a MOF side functional group of a raw material MOF was added to the raw material MOF, to thereby yield to-be-shaped MOF materials. As a raw material MOF for preparing to-be-shaped MOF materials corresponding to samples S1 to S10; i.e., a MOF of sample S11, UiO-66-COOH (product of Atomis), yielded by incorporating a carboxy group (-COOH) into the aforementioned UiO-66, was used. As a silane derivative to be added to the raw material MOF, 1,6-bis(trimethoxysilyl)hexane (KBM-3066, product of Shin-Etsu Chemical Co., Ltd.) was used. Hereinafter, production of the samples will be successively described.

### [Samples S1 to S3]

MOF (UiO-66-COOH), a silane derivative (KBM-3066), and an organic solvent (ethanol) were mixed under stirring at ambient temperature for 24 hours, and then the solvent was removed through filtration under reduced pressure, followed by drying in vacuum at 130°C for 5 hours, to thereby prepare to-be-shaped MOF materials of samples S1 to S3. The amount of the silane derivative added in preparation of the samples (i.e., a ratio of the amount of the silane derivative to the total amount of MOF and the silane derivative) was adjusted to 2.5 wt.% (sample S1), 5 wt% (sample S2), and 10 wt% (sample S3), respectively.

### [Samples S4, S9, and S10]

The to-be-shaped MOF material of sample S2 was compression-molded, to thereby prepare shaped bodies of samples S4, S9, and S10. Specifically, the to-be-shaped MOF material of sample S2 was uniaxially compression-molded, to thereby form a column (diameter: 3 mm, height: 3 mm) (corresponding to a mean particle size of 3 mm). The pressure at compression (i.e., press load) was adjusted to 1 MPa (samples S4 and S9) and 5 MPa (sample S10). Sample S4 was formed without tapping, and samples S9 and S10 were formed with tapping. The term "tapping" refers to charging the to-be-shaped MOF material which is subjected to compression molding while the material is tapped (vibrated up and down) so as to attain a firm filling state.

### [Samples S5 to S8]

The to-be-shaped MOF material of sample S2 was extruded, to thereby form a shaped body of sample S5. Also, the to-be-shaped MOF material of sample S1 was extruded, to thereby form shaped bodies of samples S6 to S8. Specifically, the aforementioned to-be-shaped MOF material of sample S1 or S2 was mixed with polyvinylpyrrolidone (K-85, product of Nippon Shokubai Co., Ltd.) serving as a binder, and pure water was added thereto. The resultant mixture was kneaded and fed to an extruder, whereby a column (diameter: 3 mm, height: 3 mm) (corresponding to a mean particle size of 3 mm) was formed. The amount of the binder added (i.e., a ratio of the amount of binder to the total amount of to-be-shaped MOF material and the binder) was adjusted to 5 wt.% (samples S5 and S6), 10 wt% (sample S7), and 20 wt% (sample S8), respectively.

### <Measurement methods>

### Calculation of specific surface area)

The specific surface area of each sample was assessed through the multi-point BET method. BET specific surface area is represented by a ratio of area to weight, with a unit of "m²/g."

### (Calculation of gas adsorption amount)

Gas adsorption amount (amount of carbon dioxide adsorbed) was determined by means of a gas adsorption amount meter through the volume method (in accordance with JIS Z8831-2 and JIS Z8831-3), whereby an adsorption/desorption isotherm was drawn. The gas adsorption amount was calculated from the isotherm.

### (Calculation of atomic fraction of complex metal of MOF to Si)

Quantitative elemental mapping (wt%) was performed by means of a transmission electron microscope with EDS (TEM-EDS), whereby the atomic fraction was determined.

### <Confirmation of localization of Si on surfaces of MOF particles)

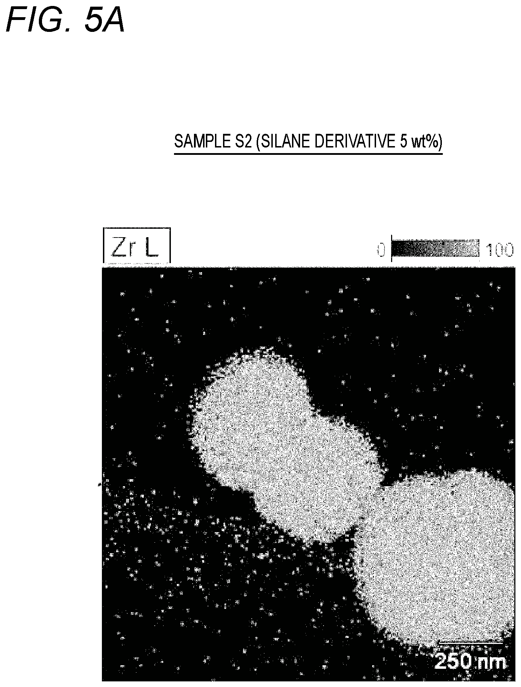

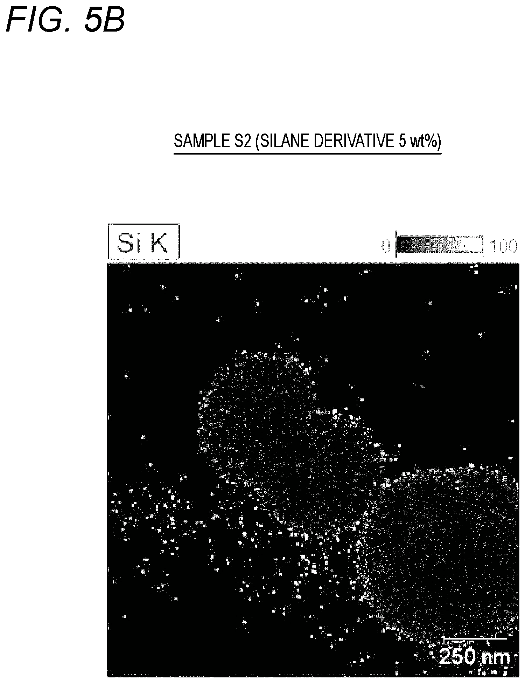

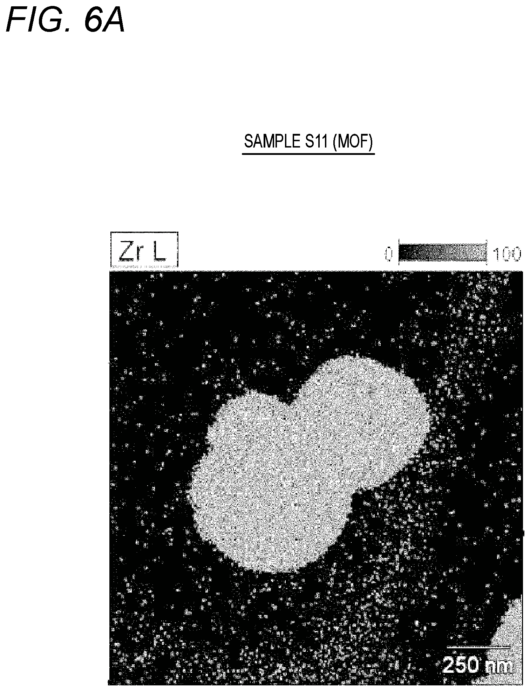

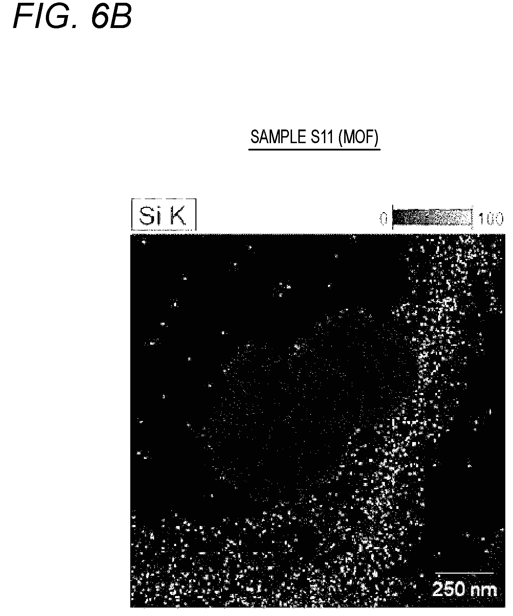

A and B of FIG. 5 are TEM images obtained through elemental mapping of sample S2. A and B of FIG. 6 are TEM images obtained through elemental mapping of sample S11. As of FIG. 5 and 6 are analytical images of zirconium (Zr) elemental mapping, and Bs of FIG. 5 and 6 are analytical images of silicon (Si) elemental mapping.

As shown in As of FIGs. 5 and 6, showing the results of Zr elemental mapping, there was confirmed that Zr was present over the crystal particles of MOF in both cases of sample 2 (corresponding to to-be-shaped MOF material of the embodiment) and sample 11 (corresponding to raw material MOF forming the to-be-shaped MOF material). In contrast, as shown in Bs of FIGs. 5 and 6, showing the results of Si elemental mapping, there was confirmed that Si was localized on the surfaces of crystal particles of MOF. Furthermore, in the case of sample 11, the presence of a signal conceivably attributed to background was observed in an area where no crystal particles were present in the entire image, denying the presence of Si. Notably, although A and B of FIG. 5 show the results in relation to sample S2, localization of Si on the surfaces of crystal surfaces of MOF was similarly confirmed in the cases of samples S1, S3, to S10, corresponding to the to-be-shaped MOF materials and shaped body of the present embodiment (data not shown).

### <Atomic fraction>

FIG. 7 is an explanatory table showing atomic fractions in samples S1 to S3 and S11. FIG. 8 is an explanatory graph with plotting of calculated atomic fractions shown in FIG. 7. As mentioned above, in samples S1 to S3, the amount of the silane derivative added to the raw material MOF in production of the samples was varied. In FIG. 8, the horizontal axis represents the amount of silane derivative added, and the vertical axis represents the atomic fraction of Si. In FIGs. 7 and 8, the atomic fraction of each sample was derived from the values measured twice.

As shown in FIG. 8, when the amount of the silane derivative added reached about 0.5 wt%, there was a positive correlation between the amount of the silane derivative added and the Si atomic fraction. The more the amount of the silane derivative added, the greater the Si atomic fraction. However, even when the amount of the silane derivative added increased to 0.5 wt% or higher, an increase in the Si atomic fraction was suppressed. Conceivably, among the silane derivative molecules, an excess amount thereof which was not involved in bonding with the MOF side functional group present on the surface of the MOF were removed with the solvent in removal of the solvent from the MOF in a step of producing the to-be-shaped MOF material. According to the results shown in FIG. 8, those skilled in the art can understand the following. Specifically, when the Si atomic fraction was 0.02 or greater, a sufficiently distinctive amount of Si with respect to the background in the to-be-shaped MOF material was thought to be present. In the to-be-shaped MOF material, when the amount of the silane derivative added was tuned to 2.5 wt% or more, an Si atomic fraction of 0.02 or higher can be easily attained. As a result, conceivably, the effect of facilitating shaping can be more sufficiently attained by localization of Si on the surfaces of crystal particles forming the MOF.

### <Carbon dioxide adsorption amount>

FIG. 9 is an explanatory graph showing carbon dioxide adsorption/desorption isotherms of samples S1 to S3, and S11 drawn at a measurement temperature of 25°C. In FIG. 9, the horizontal axis represents absolute pressure, and the vertical axis represents carbon dioxide adsorption amount. As shown in FIG. 9, all the carbon dioxide adsorption/desorption isotherms of samples S1 to S3 were upward shifted with respect to the carbon dioxide adsorption/desorption isotherm of sample S11, confirming that addition of a silane derivative to MOF resulted in an increase in carbon dioxide adsorption amount. In a range of the amount of the silane derivative added of 2.5 wt% to 10 wt%, the smaller the amount of the silane derivative added, the greater the increase in the carbon dioxide adsorption amount. Specifically, when the amount of the silane derivative added was adjusted to be 5 wt% or less, the carbon dioxide adsorption amount at an absolute pressure of 0.4 was successfully elevated to 25 cm³ (STP)/g or more, when the carbon dioxide adsorption/desorption isotherm was drawn at a measurement temperature of 25°C.

FIG. 10 is an explanatory table showing measurements of the BET specific surface areas and carbon dioxide adsorption amount (0°C) of samples S2, S4, S5, and S11. FIG. 11 is an explanatory graph showing the carbon dioxide adsorption/desorption isotherms of samples S2, S4, S5, and S11 drawn at a measurement temperature of 0°C. FIG. 12 is an explanatory table showing measurements of the BET specific surface areas and carbon dioxide adsorption amount (25°C) of samples S2, S4, S5, and S11. FIG. 13 is an explanatory graph showing the carbon dioxide adsorption/desorption isotherms of samples S2, S4, S5, and S11 drawn at a measurement temperature of 25°C.

In FIGs. 10 and 12, the BET specific surface area of sample S5 or sample S11 represents a value obtained by two measurements. Also, in FIGs. 10 and 12, the carbon dioxide adsorption amount represents a maximum value of the carbon dioxide adsorption amount; i.e., the adsorption amount on a carbon dioxide adsorption/desorption isotherm drawn at an absolute pressure of 1.00 shown in FIG. 11 or 13. In FIGs. 10 and 12, in addition to the carbon dioxide adsorption amounts of samples S2, S4, and S5, ratios of increase with respect to the carbon dioxide adsorption amount of sample S11 are given (in parentheses). Notably, in the following description, the ratio of increase in carbon dioxide adsorption amount of a to-be-shaped MOF material or a shaped body, with respect to the carbon dioxide adsorption amount of a MOF (raw material MOF) having the same composition as that of the to-be-shaped MOF material, except that no silicon was contained, at a specific measurement temperature and absolute pressure, may also be referred to as a "ratio of increase."

As shown in FIGs. 9 to 13, samples S1 to S3 (to-be-shaped MOF materials in which silane derivative had been added to MOF); sample S4 (obtained through compression molding of sample S2); and sample S5 (obtained through extrusion of sample S2) were all found to exhibit a considerable increase in carbon dioxide adsorption amount as compared with the MOF to which no silane derivative had been added, in any measurement temperature of 0°C and 25°C. As shown in FIG. 10, under the conditions to achieve a maximum carbon dioxide adsorption amount (i.e., absolute pressure: 1.00, measurement temperature: 0°C), sample S2 exhibited a ratio of increase in carbon dioxide adsorption amount with respect to sample S11 of 2.3, sample S4 2.15, and sample S5 2.4. In addition, as shown in FIG. 12, under the conditions to achieve a maximum carbon dioxide adsorption amount (i.e., absolute pressure: 1.00, measurement temperature: 25°C), sample S2 exhibited a ratio of increase in carbon dioxide adsorption amount with respect to sample S11 of 3.1, sample S4 2.65, and sample S5 3.1.

The aforementioned to-be-shaped MOF material successfully exhibited a carbon dioxide adsorption amount 1.5 times or greater the carbon dioxide adsorption amount of a MOF (raw material MOF) having the same composition as that of the to-be-shaped MOF material, except that no silicon is contained, when a carbon dioxide adsorption/desorption isotherm was drawn at a measurement temperature of 0°C, and the carbon dioxide adsorption amount at an absolute pressure of 0.4 or higher was determined in a comparative manner. Also, the aforementioned to-be-shaped MOF material (e.g., any of samples S1 to S3 shown in FIG. 9) was found to successfully exhibit a carbon dioxide adsorption amount 1.5 times or greater the carbon dioxide adsorption amount of a material MOF (e.g., sample S110 shown in FIG. 9), except that no silicon is contained, when a carbon dioxide adsorption/desorption isotherm was drawn at a measurement temperature of 25°C, and the carbon dioxide adsorption amount at an absolute pressure of 0.4 or higher was determined in a comparative manner.

The shaped body formed by molding the to-be-shaped MOF material (e.g., any of samples S4 and S5 shown in FIG. 11) was found to successfully exhibit a carbon dioxide adsorption amount 1.5 times or greater the carbon dioxide adsorption amount of a MOF (a raw material MOF, for example, sample S11 shown in FIG.11) having the same composition as that of the to-be-shaped MOF material, except that no silicon is contained, when a carbon dioxide adsorption/desorption isotherm was drawn at a measurement temperature of 0°C, and the carbon dioxide adsorption amount at an absolute pressure of 0.4 or higher was determined in a comparative manner. Also, the shaped body formed by molding the to-be-shaped MOF material (e.g., any of samples S4 and S5 shown in FIG. 13) was found to successfully exhibit a carbon dioxide adsorption amount 1.5 times or greater the carbon dioxide adsorption amount of a raw material MOF (e.g., sample S11 shown in FIG.13), when a carbon dioxide adsorption/desorption isotherm was drawn at a measurement temperature of 25°C, and the carbon dioxide adsorption amount at an absolute pressure of 0.4 or higher was determined in a comparative manner.

Notably, as shown in the FIGs. 9, 11, and 13 above and FIGs. 14 and 15 below, the carbon dioxide adsorption/desorption isotherm of any of the MOF (sample S11), the to-be-shaped MOF materials in which a silane derivative had been added to MOF (samples S1 to S3), and the shaped bodies (samples S4 to S10) of the to-be-shaped MOF materials assumed a so-called type-I adsorption/desorption isotherm, which is generally observed as an adsorption/desorption isotherm of, for example, an adsorbent provided with micropores having a pores size of 2 nm or less, or the like. Therefore, when the absolute pressure is relatively low (e.g., an absolute pressure lower than 0.3), the carbon dioxide adsorption amount steeply increases with a rise in absolute pressure, whereas when the absolute pressure is relatively high (e.g., an absolute pressure of 0.3 or higher), the extent of an increase in carbon dioxide adsorption amount concomitant with a rise in absolute pressure is suppressed. Not only when the absolute pressure is relatively low but also when the absolute pressure is relatively high, the slope of the carbon dioxide adsorption/desorption isotherm of any of the to-be-shaped MOF materials in which a silane derivative had been added to MOF (samples S1 to S3) and the shaped bodies (samples S4 to S10) becomes greater than that of a MOF (raw material MOF, sample S11) having the same composition as that of the to-be-shaped MOF material, except that no silicon is contained. Thus, when the carbon dioxide adsorption amount of a to-be-shaped MOF material or a shaped body at an absolute pressure of 0.4 exhibits a specific ratio in increase with respect to the carbon dioxide adsorption amount of a raw material MOF at an absolute pressure of 0.4, the ratio in increase can be a value equal to or greater than the above specific ratio at an absolute pressure of 0.4 or higher.

In the aforementioned to-be-shaped MOF material, the carbon dioxide adsorption amount at an absolute pressure of 0.4 can be elevated to 45 cm³ (STP)/g or more, when the carbon dioxide adsorption/desorption isotherm was drawn at a measurement temperature of 0°C. Also, in the aforementioned to-be-shaped MOF material, the carbon dioxide adsorption amount at an absolute pressure of 0.4 was found to be successfully elevated to 25 cm³ (STP)/g or more, when the carbon dioxide adsorption/desorption isotherm was drawn at a measurement temperature of 25°C (for example, samples S1 and S2 shown in FIG. 9).

In the shaped body formed by molding the to-be-shaped MOF material, the carbon dioxide adsorption amount at an absolute pressure of 0.4 was found to be successfully elevated to 40 cm³ (STP)/g or more, when the carbon dioxide adsorption/desorption isotherm was drawn at a measurement temperature of 0°C (for example, samples S4 and S5 shown in FIG. 11). Also, in the shaped body formed by molding the to-be-shaped MOF material, the carbon dioxide adsorption amount at an absolute pressure of 0.4 was found to be successfully elevated to 20 cm³ (STP)/g or more, when the carbon dioxide adsorption/desorption isotherm was drawn at a measurement temperature of 25°C (for example, samples S4 and S5 shown in FIG. 13, samples S6 to S8 shown in FIG. 14, and samples S4 and S9 shown in FIG. 15).

### <Conditions of extrusion>

FIG. 14 is an explanatory graph showing carbon dioxide adsorption/desorption isotherms of a to-be-shaped MOF material (sample S1) and shaped bodies formed by extruding the to-be-shaped MOF material (samples S6 to S8) drawn at a measurement temperature of 25°C. In all the cases of samples S1, and S6 to S8, an increase in carbon dioxide adsorption amount was confirmed as compared with a raw material MOF (see, for example, sample S11 in FIGs. 9 and 13). Samples S6 to S8 were extrusion products obtained by molding with a binder (PVP). As shown in FIG.14, the carbon dioxide adsorption amount was found to be suppressed, as the amount of binder increased. However, sample S6 (with the smallest amount of binder added, 5 wt%) exhibited a carbon dioxide adsorption amount equivalent to that of the to-be-shaped MOF material containing no binder (sample S1). As described in relation to FIG. 3, the above phenomenon is conceivably attributed to newly formed gas-adsorbable sites between the surface of a MOF and a silane derivative through bonding between the silane derivative added to the MOF and the MOF. In other words, conceivably, the adverse effect of suppressing the carbon dioxide adsorption amount evoked through addition of a binder would be cancelled by virtue of provision of a new gas adsorption mechanism, and no substantial change of the carbon dioxide adsorption amount occurs, even though a small amount of binder is added. In another conceivable reason, since the pressure applied during molding is smaller in extrusion than in compression molding, the extent of pressing particles of MOF is relatively small, whereby gas can readily pass through the inside of the shaped body, thereby readily securing the carbon dioxide adsorption amount.

### <Conditions of compression molding>

FIG. 15 is an explanatory graph showing carbon dioxide adsorption/desorption isotherms of shaped bodies formed through compression molding of the to-be-shaped MOF material (samples S4, S9, and S10) drawn at a measurement temperature of 25°C. All of the samples S4, S9, and S10 were found to exhibit an increase in carbon dioxide adsorption amount, as compared with raw material MOF (see, for example, sample S11 shown in FIGs. 9 and 13). As shown in FIG. 15, as the press load during compression molding increased, the carbon dioxide adsorption amount of the shaped body was suppressed (samples S9 and S10). In addition, when tapping (charging MOF material in compression molding, while the material is tapped) was conducted, the carbon dioxide adsorption amount of the shaped body was suppressed (samples S4 and S9).

The present disclosure is not limited to the aforementioned embodiments and the like and may be carried out as various modes, so long as they fall within a scope which is not deviated from the gist of the disclosure. For example, the technical features in the embodiments corresponding to the technical features of the aspects described in the column of SUMMARY OF THE INVENTION may be appropriately replaced or combined, in order to solve a part or the entirety of the aforementioned problems, or to achieve a part or the entirety of the aforementioned effects. In addition, if the relevant technical features are not described as essential elements in the present specification, they may appropriately be deleted.

The present disclosure may be carried out as the following embodiments.

### [Application Example 1]

A to-be-shaped MOF material which is formed of a metal organic framework (MOF),
characterized in that the material contains silicon (Si) localized on surfaces of crystal particles forming the MOF.

### [Application Example 2]

The to-be-shaped MOF material as described in Application Example 1,
which has a ratio of an atomic fraction of a complex metal contained in the MOF to silicon (Si) (complex metal contained in the MOF: Si) of 0.98:0.02 to 0.9:0.10.

### [Application Example 3]

A shape body formed of a to-be-shaped MOF material as recited in Application Example 1 or 2.

### [Application Example 4]

The shaped body as described in Application Example 3,
which has a mean particle size of 1 mm or greater.

### [Application Example 5]

The to-be-shaped MOF material as described in Application Example 1 or 2,
wherein, when a carbon dioxide adsorption/desorption isotherm is drawn at a measurement temperature of 0°C, and a carbon dioxide adsorption amount at an absolute pressure of 0.4 or higher is determined in a comparative manner, the material exhibits a carbon dioxide adsorption amount which is 1.5 times or greater the carbon dioxide adsorption amount of a MOF having the same composition as that of the to-be-shaped MOF material, except that no silicon is contained.

### [Application Example 6]

The to-be-shaped MOF material as described in any one of Application Examples 1, 2, and 5,
wherein, when a carbon dioxide adsorption/desorption isotherm is drawn at a measurement temperature of 25°C, and a carbon dioxide adsorption amount at an absolute pressure of 0.4 or higher is determined in a comparative manner, the material exhibits a carbon dioxide adsorption amount which is 1.5 times or greater the carbon dioxide adsorption amount of a MOF having the same composition as that of the to-be-shaped MOF material, except that no silicon is contained.

### [Application Example 7]

The shaped body as described in Application Example 3 or 4,
wherein, when a carbon dioxide adsorption/desorption isotherm is drawn at a measurement temperature of 0°C, and a carbon dioxide adsorption amount at an absolute pressure of 0.4 or higher is determined in a comparative manner, the shaped body exhibits a carbon dioxide adsorption amount which is 1.5 times or greater the carbon dioxide adsorption amount of a MOF having the same composition as that of the to-be-shaped MOF material, except that no silicon is contained.

### [Application Example 8]

The shaped body as described in any one of Application Examples 3, 4, and 7,
wherein, when a carbon dioxide adsorption/desorption isotherm is drawn at a measurement temperature of 25°C, and a carbon dioxide adsorption amount at an absolute pressure of 0.4 or higher is determined in a comparative manner, the shaped body exhibits a carbon dioxide adsorption amount which is 1.5 times or greater the carbon dioxide adsorption amount of a MOF having the same composition as that of the to-be-shaped MOF material, except that no silicon is contained.

### [Application Example 9]

The to-be-shaped MOF material as described in any one of Application Examples 1, 2, 5, and 6,
wherein, when a carbon dioxide adsorption/desorption isotherm is drawn at a measurement temperature of 0°C, the material has a carbon dioxide adsorption amount of 45 cm³ (STP)/g or more, at an absolute pressure of 0.4.

### [Application Example 10]

The to-be-shaped MOF material as described in any one of Application Examples 1, 2, 5, 6, and 9,
wherein, when a carbon dioxide adsorption/desorption isotherm is drawn at a measurement temperature of 25°C, the material has a carbon dioxide adsorption amount of 25 cm³ (STP)/g or more, at an absolute pressure of 0.4.

### [Application Example 11]

The shaped body as described in any one of Application Examples 3, 4, 7, and 8,
wherein, when a carbon dioxide adsorption/desorption isotherm is drawn at a measurement temperature of 0°C, the shape body has a carbon dioxide adsorption amount of 40 cm³ (STP)/g or more, at an absolute pressure of 0.4.

### [Application Example 12]

The shaped body as described in any one of Application Examples 3, 4, 7, 8, and 11,
wherein, when a carbon dioxide adsorption/desorption isotherm is drawn at a measurement temperature of 25°C, the shape body has a carbon dioxide adsorption amount of 20 cm³ (STP)/g or more, at an absolute pressure of 0.4.

### [Application Example 13]

A gas adsorbent for adsorbing and releasing gas,
characterized in that the gas adsorbent is formed of a shaped body as recited in any one of Application Examples 3, 4, 7, 8, 11, and 12.

### [Application Example 14]

A gas adsorption apparatus, characterized by including a gas adsorbent as recited in Application Example 13.

### [Application Example 15]

A method for producing a to-be-shaped MOF material,
characterized by including adding a silane derivative having a functional group that can form a chemical bond with a functional group present on a surface the MOF to a metal organic framework (MOF).

## Claims

1. A to-be-shaped MOF material which is formed of a metal organic framework (MOF),
**characterized in that** the material contains silicon (Si) localized on surfaces of crystal particles forming the MOF.

2. The to-be-shaped MOF material according to claim 1,
which has a ratio of an atomic fraction of a complex metal contained in the MOF to silicon (Si) (complex metal contained in the MOF: Si) of 0.98:0.02 to 0.9:0.10.

3. A shape body formed of a to-be-shaped MOF material as recited in claim 1 or 2.

4. The shaped body according to claim 3,
which has a mean particle size of 1 mm or greater.

5. The to-be-shaped MOF material according to claim 1 or 2,
wherein, when a carbon dioxide adsorption/desorption isotherm is drawn at a measurement temperature of 0°C, and a carbon dioxide adsorption amount at an absolute pressure of 0.4 or higher is determined in a comparative manner, the material exhibits a carbon dioxide adsorption amount which is 1.5 times or greater the carbon dioxide adsorption amount of a MOF having the same composition as that of the to-be-shaped MOF material, except that no silicon is contained.

6. The to-be-shaped MOF material according to any one of claims 1, 2, and 5,
wherein, when a carbon dioxide adsorption/desorption isotherm is drawn at a measurement temperature of 25°C, and a carbon dioxide adsorption amount at an absolute pressure of 0.4 or higher is determined in a comparative manner, the material exhibits a carbon dioxide adsorption amount which is 1.5 times or greater the carbon dioxide adsorption amount of a MOF having the same composition as that of the to-be-shaped MOF material, except that no silicon is contained.

7. The shaped body according to claim 3,
wherein, when a carbon dioxide adsorption/desorption isotherm is drawn at a measurement temperature of 0°C, and a carbon dioxide adsorption amount at an absolute pressure of 0.4 or higher is determined in a comparative manner, the shaped body exhibits a carbon dioxide adsorption amount which is 1.5 times or greater the carbon dioxide adsorption amount of a MOF having the same composition as that of the to-be-shaped MOF material, except that no silicon is contained.

8. The shaped body according to claim 3,
wherein, when a carbon dioxide adsorption/desorption isotherm is drawn at a measurement temperature of 25°C, and a carbon dioxide adsorption amount at an absolute pressure of 0.4 or higher is determined in a comparative manner, the shaped body exhibits a carbon dioxide adsorption amount which is 1.5 times or greater the carbon dioxide adsorption amount of a MOF having the same composition as that of the to-be-shaped MOF material, except that no silicon is contained.

9. The to-be-shaped MOF material according to claim 1 or 2,
wherein, when a carbon dioxide adsorption/desorption isotherm is drawn at a measurement temperature of 0°C, the material has a carbon dioxide adsorption amount of 45 cm³ (STP)/g or more, at an absolute pressure of 0.4.

10. The to-be-shaped MOF material according to claim 1 or 2,
wherein, when a carbon dioxide adsorption/desorption isotherm is drawn at a measurement temperature of 25°C, the material has a carbon dioxide adsorption amount of 25 cm³ (STP)/g or more, at an absolute pressure of 0.4.

11. The shaped body according to claim 3,
wherein, when a carbon dioxide adsorption/desorption isotherm is drawn at a measurement temperature of 0°C, the shape body has a carbon dioxide adsorption amount of 40 cm³ (STP)/g or more, at an absolute pressure of 0.4.

12. The shaped body according to claim 3,
wherein, when a carbon dioxide adsorption/desorption isotherm is drawn at a measurement temperature of 25°C, the shape body has a carbon dioxide adsorption amount of 20 cm³ (STP)/g or more, at an absolute pressure of 0.4.

13. A gas adsorbent for adsorbing and releasing gas,
**characterized in that** the gas adsorbent is formed of a shaped body as recited in any one of claims 3, 4, 7, 8, 11, and 12.

14. A gas adsorption apparatus, **characterized by** comprising a gas adsorbent as recited in claim 13.

15. A method for producing a to-be-shaped MOF material,
**characterized by** comprising adding a silane derivative having a functional group that can form a chemical bond with a functional group present on a surface the MOF to a metal organic framework (MOF).
